# EUROPÄISCHE PATENTSCHRIFT

(11) **EP 3 724 852 B1**
(45) Veröffentlichungstag und Bekanntmachung des Hinweises auf die Patenterteilung: **17.08.2022**
(21) Anmeldenummer: 19787149.4
(22) Anmeldetag: 12.09.2019
(51) Int. Cl.: G06T 7/73, G06K 9/00, G06T 7/77, G06V 40/10

(54) **VERFAHREN ZUR BERÜHRUNGSLOSEN ERMITTLUNG VON FREIHEITSGRADEN EINES KÖRPERS**
METHOD FOR THE CONTACTLESS DETERMINATION OF THE DEGREES OF FREEDOM OF A BODY
PROCÉDÉ DE DÉTERMINATION SANS CONTACT DE DEGRÉS DE LIBERTÉ D'UN CORPS

(30) Priorität: 09.10.2018 DE 102018124877
(43) Veröffentlichungstag der Anmeldung: 21.10.2020
(73) Patentinhaber: Inferics GmbH, 76185 Karlsruhe (DE)
(72) Erfinder: LINK, Norbert, 76187 Karlsruhe (DE)
(74) Vertreter: Christ, Niko
(86) Internationale Anmeldenummer: PCT/DE2019/100813
(87) Internationale Veröffentlichungsnummer: WO 2020/074035

(56) Entgegenhaltungen:
- EP-B1- 2 724 318
- US-A1- 2015 186 716
- YIHENG CAI ET AL: "3D Human Pose Estimation from RGB+D Images with Convolutional Neural Networks", BIOMEDICAL ENGINEERING AND BIOINFORMATICS, ACM, 2 PENN PLAZA, SUITE 701NEW YORKNY10121-0701USA, 19. September 2018 (2018-09-19), Seiten 64-69, XP058422776, DOI: 10.1145/3278198.3278225 ISBN: 978-1-4503-6506-2
- JAMIE SHOTTON ET AL: "Efficient Human Pose Estimation from Single Depth Images", IEEE TRANSACTIONS ON PATTERN ANALYSIS AND MACHINE INTELLIGENCE, Bd. 35, Nr. 12, 1. Dezember 2013 (2013-12-01), Seiten 2821-2840, XP055370295, USA ISSN: 0162-8828, DOI: 10.1109/TPAMI.2012.241

## Beschreibung

Die vorliegende Erfindung betrifft ein Verfahren zur berührungslosen Ermittlung von inneren Freiheitsgraden eines Körpers, welche Lagen und Orientierungen seiner beweglichen Teile, beziehungsweise dessen Deformation in Bezug auf ein Referenzmodell in einem Körperkoordinatensystem darstellen, im dreidimensionalen Raum, bei dem ein bildgebender Sensor den Körper in einem rad-D-Bild erfasst.

Ein derartiges Verfahren ist bereits aus der EP 2 724 318 B1 vorbekannt. Hierbei handelt es sich um ein Verfahren, bei dem in einem Videospiel ein vor einem Erfassungsgerät gestikulierender Körper erfasst wird. Es wird ein Tiefenbild erstellt, welches durch Einfügen von Modellkomponenten aufgefüllt wird, um die Lage der jeweiligen Modellkomponenten zueinander auszuwerten. Weiter ist auf die US 2015/0186716 A1 hinzuweisen.

Ganz allgemein ist es bekannt, durch radiometrische Bilder die radiometrischen Eigenschaften, also spektrale Eigenschaften und Intensitäten, sowie durch Tiefen- beziehungsweise Abstandsbilder die geometrischen Eigenschaften der erfassten Umgebung als Projektionen auf zweidimensionale Sensorflächen darzustellen. Ein radiometrisches Bild stellt dabei die radiometrischen Eigenschaften der abgebildeten Objekte dar, wobei die Position des Bildpunktes in der Bildsensorfläche darstellt, in welcher Raumrichtung sich der dorthin abgebildete Objektpunkt befindet. Die dem Bildpunkt des radiometrischen Bildes zugeordneten Werte stellen die spektralen Eigenschaften und Intensitäten der durch den Bildpunkt vom Objektpunkt empfangenen Strahlung durch Mengen zugeordneter Farbwerte dar. Die Verteilung von Farbwerten auf eine Menge von Bildpunkten wird als Textur bezeichnet.

Ein Tiefenbild stellt hingegen die räumlichen Eigenschaften der abgebildeten Objekte dar, wobei die Position des Bildpunktes in der Bildsensorfläche darstellt, in welcher Raumrichtung sich der dorthin abgebildete Objektpunkt befindet. Die dem Bildpunkt des Tiefenbildes zugeordneten Werte stellen den räumlichen Abstand des zum jeweiligen Bildpunkt gehörigen Objektpunktes von einem Referenzpunkt bezüglich des Bildes dar. Eine Kombination dieser beiden Bilder wird im Spezialfall, dass das radiometrische Bild ein RGB-Bild ist, als RGB-D-Bild, also als Bild mit Informationen zu Rotwert, Gelbwert, Blauwert und Tiefenwert, bezeichnet. Im Nachfolgenden wird analog die allgemeine Kombination eines radiometrischen Bildes mit einem Tiefenbild als rad-D-Bild bezeichnet.

Die Erfindung ist in das Fachgebiet der digitalen Bildverarbeitung einzuordnen. Hierbei wird die Bestimmung äußerer Freiheitsgrade von Körpern, welche deren Lage und Orientierung als Ganzes im Raum beschreiben, meist als 3D-Posenschätzung bezeichnet. Für starre Körper ist damit der räumliche Zustand vollständig bestimmt und kann durch Angabe eines Körperkoordinatensystems, also von dessen Ursprungslage in einem äußeren Koordinatensystem und der Orientierung von dessen Koordinatenachsen in diesem äußeren Koordinatensystem, repräsentiert werden. Ist der Körper jedoch seinerseits aus mehreren gegeneinander beweglichen Objekten zusammengesetzt, oder in sich deformierbar, so wird für die vollständige Beschreibung des räumlichen Zustands des Körpers zusätzlich eine Bestimmung der inneren Freiheitsgrade des Körpers benötigt, welche die Lagen und Orientierungen der beweglichen Teile, beziehungsweise dessen Deformation in Bezug auf ein Referenzmodell in einem Körperkoordinatensystem darstellen. Handelt es sich bei den betrachteten Körpern beispielsweise um Personen, so können die äußeren Freiheitsgrade etwa durch die Schwerpunktskoordinaten und die Drehmatrix in Bezug auf das äußere Koordinatensystem angegeben werden, während die inneren Freiheitsgrade zum Beispiel von den Lagen der Gelenkpunkte im Körperkoordinatensystem, einer Mesh-Darstellung eines Körpermodells, Parametern eines hinsichtlich der Körperform flexiblen Körpers, oder durch eine Deformationstransformation eines Standardkörpers dargestellt werden. Häufig wird als Pose eines Körpers sowohl die Menge der äußeren, als auch die Menge der inneren Freiheitsgrade, oder auch die Menge aller Freiheitsgrade eines Körpers bezeichnet.

Die Ansätze zur Posenschätzung in diesem allgemeinen Sinn werden anhand der jeweils ermittelten Freiheitsgrade des Körpers unterschieden. Während starre Körper ausschließlich äußere Freiheitsgrade besitzen, können flexible Körper zusätzlich auch innere Freiheitsgrade aufweisen.

Die vorliegende Erfindung beruht auf der Verknüpfung der Auswertungsergebnisse von radiometrischen Bildern mit der Information aus Tiefenbildern von der gleichen von einer radiometrischen Kamera bzw. Tiefenkamera erfassten Szene. Je nach Quelle dieser Bilder können diese auch bereits im Vorfeld zusammengefügt oder direkt als rad-D-Bild aufgenommen worden sein. Der Stand der Technik ist besonders stark entwickelt bei der Erkennung von Bildbereichen, in denen die Ausprägung der Textur von Objekten oder Objektteilen einer bestimmten Klasse hervorgerufen wurde. Dieser Vorgang wird als Detektion bezeichnet und ordnet einem Bildbereich oder einer ausgezeichneten Pixel-Koordinate daraus ein entsprechendes Klassen-Label zu. Relevant sind für die Erfindung lediglich flexible Körper, deren intrinsische und extrinsische Freiheitsgrade über die Erfindung berührungslos ermittelt werden sollen.

Die Erfindung bezieht sich ferner auf Körper in ihrer natürlichen Erscheinungsform, so dass alle Verfahren, welche auf an den Körpern zusätzlich angebrachten Markern beruhen, ebenfalls nicht betrachtet werden sollen. Die Erfindung soll ferner die Freiheitsgrade der Objekte instantan bestimmen, also aus einer Momentaufnahme einer Szene, in welcher der Körper erfasst wird, weshalb Verfahren, welche eine zeitliche Folge von Aufnahmen der Szene auswerten, um die Freiheitsgrade zu bestimmen, ebenfalls nicht Gegenstände der Betrachtungen im Stand der Technik sind.

Unter alternativer Verwendung von ausschließlich radiometrischen Bildern oder ausschließlich Tiefenbildern kann die gestellte Aufgabe zwar grundsätzlich gelöst werden, jedoch ist dies mit Einschränkungen hinsichtlich Qualität und Flexibilität in Bezug auf die zu untersuchenden Körper verbunden.

Im Falle der Bestimmung von Freiheitsgraden auf der Basis von radiometrischen Bildern ist es bekannt, Kameras einzusetzen, die radiometrische Eigenschaften von Objektoberflächen, wie etwa Energiestromdichten reflektierten Lichts oder abgestrahlter Infrarot- oder Mikrowellenstrahlung, auf einer Sensorfläche als elektrisches Signal darstellen. Dieses wird abgetastet, digitalisiert und als Datenarray verfügbar gemacht. Die Schätzung der allgemeinen 3D-Pose von Körpern auf Basis der Daten von radiometrischen Bildern ist vor Allem für die Objektklasse von Personen bezüglich Körper- und Handposen sowie Kopfposen ein sehr stark bearbeitetes Aufgabenfeld, für dessen Lösung Methoden entwickelt wurden, welche ebenfalls auf andere Objektklassen mit inneren geometrischen Freiheitsgraden übertragbar sind.

Hierbei ist zu unterscheiden zwischen der Beschreibung der inneren Freiheitsgrade durch direkte Angabe der 3D-Koordinatenwerte charakteristischer Objektpunkte, wie etwa der Gelenkpunkte einer Person, Angaben von Parameterwerten eines flexiblen Körpermodells, das durch ein parametrisiertes Oberflächen-Funktionenmodell dargestellt ist, sowie der Angabe der Parameter einer Transformationsvorschrift, aus der sich die Geometrie des aktuellen Körpers aus der Geometrie eines gewählten Referenzmodells darstellen lässt, oder durch die Verschiebung der Knoten eines Oberflächen-Netzes, üblicherweise auch als Mesh bezeichnet, der jeweils betrachteten Körper-Klasse. Grundsätzlich leiden alle diese Ansätze darunter, dass bei der Abbildung einer Kamera auf eine zumeist ebene Bildfläche lediglich die Richtung des zu einem Bildpunkt gehörigen Sehstrahls dargestellt wird und somit die Information über den Abstand und damit über die zugrunde liegenden 3D-Koordinaten des Objektpunktes verloren gehen. Die Rekonstruktion der 3D-Koordinaten aus einem derartigen Bild stellt somit ein mehrdeutiges, inverses Problem dar. Für die Rekonstruktion der 3D-Koordinaten muss die grundlegende Mehrdeutigkeit durch Randbedingungen über die geometrische Objektkonstellation und deren Transformation in das Bild aufgelöst werden. Das grundsätzliche Vorgehen bei der Ermittlung der Parameterwerte bei Verwendung eines flexiblen Oberflächen-Funktionenmodells oder derjenigen einer Transformationsvorschrift besteht in einer Minimierung der Abweichung des in einer Aufnahme dargestellten Objektbildes und des aufgrund der Parameter des flexiblen Objektmodells oder der Parameter der Transformationsvorschrift berechneten Objektbildes.

Ferner müssen dazu noch die Parameter des Abbildungsmodells geometrisch und radiometrisch sowie des Beleuchtungsmodells oder andere Modelle der jeweiligen Texturerzeugung bekannt sein oder mit geschätzt werden. Bei diesen Methoden ist somit eine Menge von Modellen erforderlich, die für die jeweilige Objektklasse und für eine Klasse an Randbedingungen wie etwa die Abbildung oder Beleuchtung, spezifisch erstellt werden müssen. Es ergibt sich damit eine große Menge an zu bestimmenden Modellparametern und folglich ein hochdimensionales Optimierungsproblem, das selbst bei einfachsten Abbildungsmodellen und selbst bei Verwendung der Quadratfehlersumme als Abweichungsmaß nicht-linear ist, was iterative Optimierungsverfahren erzwingt.

Ferner weist die Kostenfunktion eine hohe Anzahl an relativen Minima auf, in denen der Optimierer stecken bleiben kann und dann falsche Lösungen liefert. Der Vorteil der monokularen Sensorik wird erkauft durch die Mehrdeutigkeit der Lösung, den hohen Aufwand bei der Erstellung der generischen Modelle für die Abbildungsgeometrie und -radiometrie für den texturerzeugenden Prozess, wie etwa die Beleuchtung, sowie für das eigentliche flexible Objektmodell oder Transformationsmodell für die zu untersuchende Objektklasse.

Die Methoden zur Gewinnung der Objektfreiheitsgrade ausschließlich aus radiometrischen Bildern setzen sich aus den dargelegten Modellen und Optimierungsverfahren zusammen. Ihr Gültigkeitsbereich ist daher immer auf das Darstellungsvermögen der verwendeten Modelle eingeschränkt, was eine Anwendung entsprechend beschränkt. Wegen der Komplexität der Optimierungsaufgabe ist ferner ein erheblicher Rechenaufwand zur Ermittlung der Freiheitsgrade vonnöten.

Werden hingegen Tiefenbilder einer Bestimmung von Freiheitsgraden zugrunde gelegt, kann zunächst festgehalten werden, dass diese besonders im Anwendungsbereich der Mensch-Maschine-Interaktion etabliert und häufig in entsprechende Consumer-Produkte integriert sind. Dabei herrschen bei den Sensoren 3D-Kameras auf der Grundlage von stereoskopischen Anordnungen, ob passiv, mit strukturierter Beleuchtung oder beides, sowie auf Grundlage von Licht-Laufzeitmessungen, vermittels Lidar oder durch den Einsatz von Time-of-flight-Kameras (TOF-Kameras) vor. Die damit erhaltenen Abstands- bzw. Tiefenbilder werden meist zunächst in Vordergrund (Objekt) und Hintergrund segmentiert, wobei entweder der Hintergrund als statisch angenommen und angelernt wird und dieser vom aktuellen Tiefen- bzw. Abstandsbild subtrahiert wird, um durch anschließende Schwellwertoperation den Vordergrund zu segmentieren, oder es wird bereits im Vorfeld ermitteltes Vorwissen über den Raumbereich, in dem sich Objekte aufhalten können, zur Segmentierung verwendet.

Die segmentierten Bildbereiche werden sodann, insbesondere bei Bildern aus Stereoverfahren, mit Rauschfiltern und Lochfüll-Verfahren, wegen nicht vorhandener Abstandsmesswerte aufgrund mangelnder Reflektivität oder Strukturierung der Oberflächen, für die eigentliche Posenschätzung vorbereitet. Letztere ermittelt die Posen der Körper entweder aus A-priori-Modellannahmen über Teilecharakteristika der betrachteten Objekte, wie etwa die geodätische Distanz der Gliedmaßen bei Personen, oder mithilfe maschinellen Lernens, wie etwa mittels tiefer Faltungsnetze erstellte Klassifikatoren, welche die segmentierten Pixel des Abstands- bzw. Tiefenbildes anhand der räumlichen Zusammenhänge mit den anderen Pixeln nach den interessierenden Objektteilen klassifizieren, deren Lagen die inneren Freiheitsgrade des Objekts darstellen.

Eine Übersicht über den entsprechenden Stand der Wissenschaft geben die Reviews von Chen, L., Wei, H. und Ferryman, J. (2013) "A survey of human motion analysis using depth imagery", Pattern Recognition Letters, 34 (15), 1995-2007 sowie Aggarwal, J. K. und Xia, L. (2014) "Human activity recognition from 3d data: A review." Pattern Recognition Letters, 48, 70-80.

Unter Posenschätzung wird im Stand der Wissenschaft ebenfalls die Ermittlung charakteristischer Punkte von Objekten, meist als "key point detection" bezeichnet, in radiometrischen Bildern verstanden, wobei deren Lage ausschließlich durch die Angabe von deren Pixelkoordinaten im Bildkoordinatensystem charakterisiert wird. Während meist lediglich hinsichtlich ihrer lokalen Umgebung auffällige Punkte ohne semantische Bedeutung zum Zweck der Zuordnung homologer Punkte in anderen Bildern (siehe z.B. [Leutenegger, S., Chli, M., & Siegwart, R. Y. (2011, November). BRISK: Binary robust invariant scalable keypoints. In Computer Vision (ICCV), 2011 IEEE International Conference on (pp. 2548-2555). IEEE.]) ermittelt werden, werden im Bereich der Posenschätzung von Personen beispielsweise auch die Lagen von Gelenkpunkten verstanden (siehe z.B. [Newell, A., Yang, K., & Deng, J. (2016, October). Stacked hourglass networks for human pose estimation. In European Conference on Computer Vision (pp. 483-499). Springer, Cham.]). Derartige keypoints besitzen für die Erfassung des Objektzustands relevante semantische Bedeutung als Objektteil (z.B. "rechtes Schultergelenk"). Die Angabe von deren Lagen ergibt eine Konstellation, die den inneren Zustands des Objekts in Bildkoordinaten widergibt, aber nicht den eigentlich relevanten räumlichen Zustand. Ebenfalls im Bildraum von radiometrischen Bildern (d.h. im Pixel-Koordinatensystem des Bildes) operieren Verfahren aus dem Stand der Wissenschaft, welche jedem Bildpunkt aufgrund seiner Farbausprägung und den Beziehungen zu den Farbausprägungen der anderen Bildpunkte ein Bedeutung in Form eines Label-Wertes zugeordnet, welches seine Zugehörigkeit zu einem Objektteil angibt (z.B. das Label "Unterarm"). Diese Verfahren werden als "Semantische Segmentierung" bezeichnet (z.B. [Long, J., Shelhamer, E., & Darrell, T. (2015). Fully convolutional networks for semantic segmentation. In Proceedings of the IEEE conference on computer vision and pattern recognition (pp. 3431-3440).]) und sowohl für ganze Objekte, wie auch für Objektteile ("Semantic Part Segmentation", z.B. für Personen [Lin, G., Milan, A., Shen, C., & Reid, I. D. (2017, July). RefineNet: Multi-path Refinement Networks for High-Resolution Semantic Segmentation. In Cvpr (Vol. 1, No. 2, p. 5).]) verwendet. Jedes Objektteil wird somit durch die zugehörige Menge an Pixelkoordinaten charakterisiert, nicht jedoch durch räumliche Information.

Ausgehend von diesem Stand der Technik liegt der vorliegenden Erfindung die Aufgabe zu Grunde, ein Verfahren zur berührungslosen Ermittlung von Freiheitsgraden eines Körpers im dreidimensionalen Raum zu schaffen, welches ein vertieftes Wissen über die Lage eines Körpers im Raum und damit über die äußeren Freiheitsgrade, sowie die räumliche Anordnung einzelner Objekte des Körpers oder seiner Oberfläche, und damit über die inneren Freiheitsgrade, vermittelt und es erlaubt, eine Situationsprüfung unter Berücksichtigung der äußeren und inneren Freiheitsgrade vorzunehmen.

Dies gelingt durch ein Verfahren zur berührungslosen Ermittlung von Freiheitsgraden eines Körpers im dreidimensionalen Raum gemäß den Merkmalen des unabhängigen Anspruchs 1. Weitere sinnvolle Ausgestaltungen eines solchen Verfahrens können den sich anschließenden abhängigen Ansprüchen entnommen werden.

Zum Verständnis des Verhaltens von Objekten wird der zeitliche Verlauf des Objektzustandes benötigt. Ist dieser durch die Lage und Orientierung des Körpers als Ganzes im Raum sowie entweder durch die räumliche Anordnung charakteristischer Objektpunkte oder Objekte, oder durch die Ausprägung der Oberfläche des Objekts beschrieben, bilden diese zusammen die Freiheitsgrade des Objekts. Die äußeren Freiheitsgrade beschreiben dabei die Lage und Orientierung des Körpers als Ganzes und die inneren Freiheitsgrade die räumliche Anordnung der charakteristischen Objektpunkte bzw. Objekte, welche die Komponenten des Körpers kennzeichnen oder die Ausprägung der Oberfläche des Objekts. Die Freiheitsgrade der charakteristischen Objekte sind durch Angabe von deren Starrkörper-Freiheitsgraden und/oder durch die Angabe der Translationsfreiheitsgrade bestimmt. Die Freiheitsgrade der Oberfläche des Objekts werden durch die Angabe ihres Polygonnetzes, also etwa der Knoten und Kanten des Graphen und Attribute zugehöriger Facetten, sowie einer Menge der zu den Knoten gehörigen Raumkoordinaten bestimmt oder bei der Beschreibung durch ein Oberflächen-Funktionenmodell durch dessen Parameterwerte, wie etwa Koeffizienten der Zusammensetzung aus Kugelflächenfunktionen, dargestellt. Zusammen beschreiben die äußeren und die inneren Freiheitsgrade den kompletten räumlichen Zustand des Objekts. So kann beispielsweise der räumliche Zustand einer Person durch die Angabe der Raum-Koordinatenwerte von Körperschwerpunkt und der Winkel-Koordinatenwerte der Hauptachsen des Körpers als äußere Freiheitsgrade und der Raumkoordinatenwerte aller Gelenke der Person sowie von deren Augen repräsentiert werden.

Im Rahmen der Erfindung wird die Ermittlung der Freiheitsgrade dadurch vorgenommen, dass ein rad-D-Bild einer beobachteten Situation erstellt wird. Dieses besteht prinzipiell aus einem radiometrischen Bild und einem Tiefenbild, wobei die Erfindung sowohl mit einem fertigen rad-D-Bild als auch mit getrennten radiometrischen Bildern und Tiefenbildern arbeiten kann. Der Einfachheit halber wird zur Erläuterung des Verfahrens im Folgenden davon ausgegangen, dass ein Tiefenbild und ein separates radiometrisches Bild erstellt werden, die mithilfe einer Auswerteeinheit zueinander referenziert werden.

Während das radiometrische Bild hierbei ein herkömmliches Foto einer Kamera sein kann, das zeilenweise aus Pixeln mit einem jeweils zugehörigen Farbwert, also beispielsweise einem Werte-Tripel der Rot-, Grün- und Blau-Ausprägung oder nur ein Grauwert, aufgebaut ist, besteht das Tiefenbild einer Kamera zeilenweise aus Pixeln mit einem jeweils zugehörigen Tiefenwert, der den Abstand desjenigen Punktes, welcher eine Reflexion auf das Pixel zurückwirft, von der Tiefenkamera repräsentiert. Derartige Kameras sind, wie bereits beschrieben, weit verbreitet und bekannt und stellen an sich bekannten Stand der Technik dar.

Die beiden so entstehenden Bilder werden dann, falls sie nicht bereits prinzipbedingt deckungsgleich sind, durch eine Transformation in einen gegenseitigen Bezug zueinander gesetzt, also referenziert, welche den Pixeln des radiometrischen Bildes das jeweils korrepondierende Pixel des Tiefenbildes zuordnet. Die Transformationsschätzung erfolgt, indem jeweils zusammengehörige, homologe, Punkte identifiziert und einander zugeordnet werden, und daraus die Parameter der je nach Kamera-Geometrien gewählten Transformationsvorschrift (z.B. Homographie für zwei Loch-Kameras) ermittelt werden. So wird jedem Bildpunkt des radiometrischen Bildes ein Tiefenwert zugeordnet.

Im Anschluss daran wird das Bildpaar aus radiometrischem Bild und Tiefenbild von einer Auswerteeinheit ausgewertet, welche zunächst charakteristische Objektpunkte oder Objekte im radiometrischen Bild identifiziert, welche die Komponenten des Körpers repräsentieren, und diese so miteinander gruppiert, dass die charakteristischen Objektpunkte oder Objekte gruppenweise anhand eines Körpermodells zu charakteristischen Konstellationen zusammengefasst werden, welche den Körper repräsentieren. Während ein charakteristischer Objektpunkt sich von anderen Punkten noch hauptsächlich dadurch unterscheidet, dass er charakteristische Ausprägungen von Texturmerkmalen und charakteristische Beziehungen zu Texturen der übrigen Punkte aufweist, erfolgt eine Erkennung von charakteristischen Konstellationen durch die Hinzunahme von weiteren Kriterien über die Zusammenhänge der charakteristischen Objektpunkte oder Objeke innerhalb eines Körpers, dargestellt in einem Körpermodell.

In einem weiteren Schritt wird entweder
a) die räumliche Position der charakteristischen Objektpunkte, beziehungsweise
b) die Starrkörper-Freiheitsgrade der Objekte einer charakteristischen Konstellation, oder
c) das Polygonnetz, oder
d) die Parameter eines Oberflächen-Funktionenmodells der räumlichen Oberfläche des Körpers bestimmt, wobei letztere auch die Parameter einer Transformationsvorschrift sein können, mit welcher die Form eines Referenzkörpers so deformiert wird (Deformationstransformation), dass sie der Form des Objekts möglichst gut entspricht,
   bestimmt.

Dies geschieht, indem zunächst die zu Pixel-Koordinaten zugehörigen Tiefenwerte ausgelesen und diesen zugeordnet werden, und zwar für
- im Fall a) die charakteristischen Objektpunkte,
- im Fall b) die Menge der Pixel, die zu einem Objektteil gehören, für alle Objektteile,
- im Fall c) die Menge der Pixel, die zum Objekt gehören.

Im nächsten Schritt erfolgt die Bestimmung der Raum-Koordinaten für alle Pixel, denen im vorangegangenen Schritt ein Tiefenwert zugeordnet wurde. Aus den beiden Sehstrahlwinkeln, die mithilfe der Parameter des Kamera-Modells aus den Pixel-Koordinaten berechnet werden, wird die Gerade des Sehstrahls berechnet. Je nach Kameraprinzip wird der zugehörige Tiefenwert, also der lotrechte Abstand von der Bildsensor-Ebene abzüglich der Kammerkonstante, oder der Abstand von der Kamera längs des Sehstrahls verwendet, um dreidimensionalen Raum-Koordinaten des zugehörigen chrakteristischen Objektpunkts in Bezug auf das Kamerakoordinatensystem berechnet und diesem zugeordnet.

Besteht eine Beziehung des Kamera-Koordinatensystems zu einem ausgewählten äußeren Koordinatensystem, in welchem das Kamerakoordinatensystem verschoben und gedreht ist, so werden die Kamerakoordinaten in dreidimensionale äußere Koordinaten umgerechnet. Ansonsten bilden die Kamerakoordinaten selbst die äußeren Koordinaten.

Sodann wird der Referenzpunkt der Konstellation entweder durch Auswahl eines speziellen charakteristischen Objektpunkts des Körpers, oder durch Berechnung aus den dreidimensionalen Raumkoordinaten, wie zum Beispiel als Schwerpunkt der Punktemengen gemäß dem jeweiligen Fall a), b), c) oder d) bestimmt, wobei im Fall b) die Vereinigungsmenge der Punkte aller Objekte herangezogen wird, im Fall c) der Schwerpunkt aller Knotenkoordinaten des Polygonnetzes und im Fall d) der Schwerpunkt der Oberflächenausprägungen. Dieser Referenzpunkt bildet den Ursprung des Körperkoordinatensystems.

Die Richtungen der drei orthogonalen Koordinatenachsen des Körperkoordinatensystems repräsentieren die räumliche Verteilung der Punktemengen gemäß dem jeweiligen Fall a), b), c) oder d) in Bezug auf den Körperursprung und werden somit aus deren relativen äußeren Koordinaten, d.h. aus der Differenz von deren äußeren Koordinaten zu den äußeren Koordnaten des Körperkoordinatensystemursprungs, etwa als Eigenvektoren von deren Kovarianzmatrix, bestimmt.

Die Ablage des Ursprungs des Körperkoordinatensystems zum Ursprung des äußeren Koordinatensystems stellt die drei Translationsfreiheitsgrade des Körpers und die Drehung der Körperkoordinatenachsen zu denen des äußeren Koordinatensystems die Rotationsfreiheitsgrade des Körpers dar. Die Translationsfreiheitsgrade und seine Rotationsfreiheitsgrade bilden sodann zusammen die äußeren Freiheitsgrade des Körpers.

Die inneren Freiheitsgrade sind dann im Fall a) durch die Angabe der Koordinaten der charakteristischen Punkte im Körperkoordinatensystem gegeben. Im Fall b) werden die inneren Freiheitsgrade aus der Menge der Starrkörper-Freiheitsgrade aller Objekte gebildet, welche diesen zugeordnet werden. Deren Berechnung erfolgt, indem das oben beschriebene Verfahren zur Berechnung des Körperkoordinatensystems auf die räumlichen Koordinaten der Punkte eines jeden Objekts angewendet wird, woraus sich für jedes Objekt die Ablage seines Referenzpunktes und die Drehung seines Objektkoordinatensystems gegenüber dem Körperkoordinatensystem als Freiheitsgrade des Objekts ergeben. Die inneren Freiheitsgrade des Körpers werden dann durch die Vereinigungsmenge der Freiheitsgrade aller Objekte des Körpers gebildet.

Im Fall c) wird aus der Menge der räumlichen Koordinaten der Objektpunkte das Polygonnetz mit Verfahren aus dem bekannten Stand der Technik berechnet. Im Fall d) werden die Parameter eines flexiblen Oberflächenmodells (z.B. die Koeffizienten von Kugelfunktionen) oder die Parameter der Deformationstransformation, die auf ein Referenzobjekt angewendet wird, durch Anpassung an die Menge der räumlichen Koordinaten der Objektpunkte mit üblichen Optimierungsverfahren bestimmt, indem die Summe der lotrechten Abstände von der jeweils sich mit den Paramterwerten ergebenden Oberfläche minimiert wird. Die Ausprägungen der Parameterwerte im Fall d) bzw. der Werte des Polygonnetzes im Fall c) stellen dann die inneren Freiheitsgrade des Körpers dar.

Für den Fall, dass mehrere Objekte des zu analysierenden Typs im radiometrischen Bild dargestellt sind, müssen die charakteristischen Objektpunkte wie oben beschrieben zu charakteristischen Konstellationen dieser unterschiedlichen Objekte zusammengestellt werden, um die Schritte der Berechnung des Körperkoordinatensystems und der Freiheitsgrade durchführen zu können.

Bei der verwendeten Hardware kann auf unterschiedliche verschiedene Techniken zurückgegriffen werden. Für das radiometrische Bild können nach dem derzeitigen Stand der Technik CCD-(charge-coupled device) oder auch CMOS-(Complementary metal-oxide-semiconductor) Kameras eingesetzt werden. Im Hinblick auf die Tiefenkamera sind beispielsweise so genannte TOF (Time Of Flight) -Kameras und Mehr-Kamera-Stereo-Kameras mit oder ohne strukturierte Beleuchtung sowie Musterprojektor-Kamera-Stereo-Anordnungen bekannt. Es gibt auch bereits bauartgemäß kombinierte Kameras, etwa die so genannte RGB-D (Red-Green-Blue-Depth)-Kameras, mit denen jeweils das Verfahren gemäß der Erfindung umgesetzt werden kann.

Im Rahmen der Objektbildung innerhalb eines Körpers werden einzelne charakteristische Objektpunkte detektiert, also identifiziert und im Bild lokalisiert sowie eine entsprechende Klassifikation zugeordnet, oder segmentiert, also jedem Pixel eine Klassifikation zugeordnet, welche das jeweilige charakteristische Objekt bezeichnet, und anschließend zu einem Körper gemäß eines Körpermodells kombiniert, welche objektbedingte Einschränkungen der inneren Freiheitsgrade - z.B. bei Personen Einschränkungen hinsichtlich des Winkels zwischen den Verbindungslinien von drei Gelenken, die Gliedmaßen darstellen - berücksichtigt. Auch kann ein Körper als ganzer segmentiert werden, um die Freiheitsgrade gemäß der Fälle c) und d) zu bestimmen. Zur Detektion der charakteristischen Objektpunkte können Klassifikatoren zum Einsatz kommen, welche jedem Bildpunkt eine Wahrscheinlichkeit zuordnen, zu einer dem charakteristischen Objektpunkt entsprechenden Klasse zu gehören. Der Bildpunkt mit der höchsten Wahrscheinlichkeit erhält, nach regelbasierter Konsistenzprüfung bezüglich der charakteristischen Konstellation, das entsprechende Klassen-Label. Dies kann bei einer Objekterkennung an einem menschlichen Körper beispielsweise ein Ellenbogengelenk sein. Entsprechende Verfahren sind im Stand der Wissenschaft bekannt (siehe z.B. [Simon, T., Joo, H., Matthews, I. A., & Sheikh, Y. (2017, July). Hand Keypoint Detection in Single Images Using Multiview Bootstrapping. In CVPR (Vol. 1, p. 2).])

Die im Körpermodell dargestellten, objektbedingten Einschränkungen der inneren Freiheitsgrade können vorteilhaft genutzt werden, um Fehler bei der Detektion charakteristischer Objekte und Konstellationen aus diesen zu vermeiden. Die Detektion charakteristischer Objekte liefert neben den Bildkoordinaten eines jeden gefundenen charakteristischen Objekts meist auch ein Konfidenzmaß, welches die Sicherheit der Detektion angibt. Meist sind diese bereits normiert, so dass die Summe der Konfidenzmaße über alle Klassen des charakteristischen Objekts eins ergibt, und werden häufig als Wahrscheinlichkeit interpretiert. Das klassenbezogene Maximum dieser Konfidenzwerte gibt also die Sicherheit an, mit welcher der charakteristische Punkt ebendieser Klasse an der Stelle mit den Bildkoordinaten erkannt wurde. Mengen charakteristischer Punkte werden gemäß dem Körpermodell zu charakteristischen Konstellationen zusammengefasst, welche dann für ein Objekt stehen. Dazu wird im Körpermodell nach dem Stand der Technik auf Wissen über den Zusammenhang der Bildkoordinaten charakteristischer Punkte innerhalb eines Objekts zurückgegriffen, der beispielsweise als Graph hinterlegt ist, wobei die Kanten des Graphen die Verbindungen zwischen charakteristischen Objekten darstellen und die Knoten des Graphen die charakteristischen Objekte selbst. Den Kanten kann sodann ein Gewichtswert zugeordnet werden, welcher die Abweichung der dargestellten Beziehung der verbundenen Punkte hinsichtlich unterschiedlicher Maße darstellt, z.B. die Abweichung von einem Normabstand, welche im Falle eines Körpers der Abstand zwischen Gelenken oder etwa die Gliedmaßenlänge wäre. Häufig wird als Gewichtswert eine Gaußfunktion dieser Maße verwendet, was der Annahme von deren Normalverteilung entspricht. Die Graphen werden dann so gebildet, dass die minimale Kantengewichtssumme unter Verwendung aus dem Stand der Wissenschaft bekannter Graph-Cut-Verfahren entsteht. Alternativ zu graph-basierten Verfahren wurden in der Vergangenheit auch regelbasierte Verfahren bei der Konstellations-Bildung eingesetzt, die bezüglich der Beziehungen zwischen den charakteristischen Punkten einer Konstellation bestehende Zusammenhänge darstellen.

Der Nachteil dieser Verfahren zur Bildung charakteristischer Konstellationen besteht darin, dass durch die lediglich zweidimensionale Darstellung die wahren Verhältnisse der charakteristischen Objekte verloren gehen und die entstehenden Konstellationen daher fehlerhaft sind oder sogar physikalisch unmögliche Objekte liefern.

Gemäß der Erfindung sind den charakteristischen Punkten jedoch die Koordinaten eines dreidimensionalen, kartesischen Koordinatensystems zugeordnet, so dass sowohl den Verbindungslinien von Punktepaaren euklidische Abstände, als auch wiederum Paaren von Verbindungslinien die Drehwinkel im Raum zugeordnet werden können. Da für eine Objektklasse diese Beziehungen in der Konstellation modellhaft bekannt und im Körpermodell dargestellt sind, werden gemäß der Erfindung die Abweichungen dieser aus dem Körpermodell ermittelten Beziehungen zu denen einer möglichen Konstellation aus den gefundenen charakteristischen Punkten zur Bewertung der Konstellation herangezogen. Wiederum werden die möglichen Mengen der Konstellationen anhand der Gewichtssumme bewertet und die Menge mit dem Minimum ausgewählt. Die Summanden ergeben sich wiederum aus Funktionen der euklidischen Abstände beziehungsweise der Drehwinkel. Aufgrund der Nutzung der gemäß Erfindung ermittelten, raumbezogenen Beziehungen ergeben sich Konstellationen mit erheblich höherer Qualität als nach dem Stand der Technik.

Sind hingegen die Abweichungen so stark bzw. ist die zugehörige Gewichtssumme einer Konstellation so klein, dass diese verworfen werden muss, so wählt die Auswerteeinheit eine andere Konstellation aus, bis sie die richtige Konstellation für den vorliegenden Fall gefunden hat.

Eine Abweichung kann unter anderem von einer Abschattung charakteristischer Objektpunkte herrühren. Ist ein Objekt für die Auswerteeinheit nicht aufzufinden, ist ein Nichtauffinden jedoch auch plausibel, so arbeitet die Auswerteeinheit ohne das betreffende Objekt weiter. Dies kann abhängig von der Perspektive der Fall sein, aber auch am betrachteten Körper liegen.

Sobald die Erkennung der inneren und äußeren Freiheitsgrade des Körpers oder der Körper abgeschlossen ist, kann in einer besonders bevorzugten Anwendung des Verfahrens auch eine Situation des Körpers oder der Körper von der Auswerteeinheit interpretiert werden. Hierzu kann die Auswerteeinheit verschiedene Aspekte der inneren und äußeren Freiheitsgrade mit Vorgaben vergleichen und hieraus einen Zustand des Körpers ableiten. So können, wiederum auf den menschlichen Körper bezogen, beispielsweise die Zustände "aufrecht stehend", "gebückt stehend", "kniend", "hockend", "liegend" oder "sitzend", etc. zusammen mit den äußeren Freiheitsgraden festgestellt werden. Kombiniert die Auswerteeinheit diese Zustandsbestimmung und die äußeren Freiheitsgrade mit denen weiterer Objekte, etwa denen eines Bettes, so kann die Auswerteeinheit hieraus eine Situationsbeschreibung, wie im Beispielsfall eine im Bett liegende Person, bestimmen.

Stimmt dann ferner die bestimmte Situationsbeschreibung mit einer hinterlegten kritischen Situationsbeschreibung, wie zum Beispiel einer am Boden liegende Person, überein, so kann von der Auswerteeinheit ein Alarm ausgelöst werden. Dies erlaubt den Einsatz der Erfindung etwa im Bereich der Überwachung von Personen, beispielsweise von älteren Menschen, die zwar im Alltag gut alleine zurechtkommen, bei denen aber dennoch ein erhöhtes Unfallrisiko besteht. Hier kann die Erfindung hilfreich eingreifen.

Die vorstehend beschriebene Erfindung wird im Folgenden anhand eines Ausführungsbeispiels näher erläutert.

Es zeigen
- Figur 1: eine Anordnung zur Durchführung eines erfindungsgemäßen Verfahrens mit einem bildgebenden Sensor sowie einer Auswerteeinheit und einer dieser zugeordneten Datenbank in einer schematischen Darstellung,
- Figur 2: einen Körper in stehender Position mit verschiedenen charakteristischen Objekten in einer schematischen Darstellung in frontaler Draufsicht, sowie
- Figur 3: den Körper gemäß Figur 2 in liegender Position mit verschiedenen charakteristischen Objekten in einer schematischen Darstellung in frontaler Draufsicht.

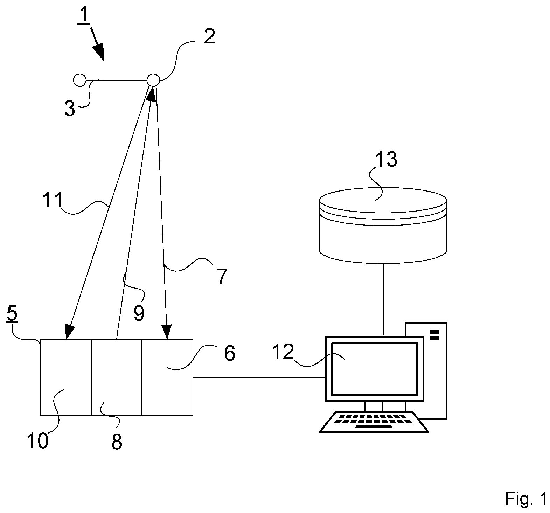

Figur 1 zeigt einen bildgebenden Sensor 5, mit welchem ein Körper 1 aufgenommen wird, um seine inneren und äußeren Freiheitsgrade zu erfassen. Figur 1 benutzt exemplarisch für die Funktion der Tiefenkamera das aus dem Stand der Technik bekannte Time-of-Flight-Prinzip, um Tiefenbilder und dazu referenzierte radiometrische Bilder zu erhalten. Es können aber auch beliebige andere Prinzipien der Erzeugung von Tiefenbildern zum Einsatz kommen, wie im Stand der Technik bekannte aktive und passive Stereo-Verfahren, Lidar-, oder Depthfrom-Motion-Verfahren. Hierzu weist der bildgebende Sensor 5 einen Emitter 8 auf, der eine Emission 9 von elektromagnetischer Strahlung, beispielsweise Infrarotlicht, auf den Körper 1 aussendet. Betrachtet wird die Reflexion 11, die von einem charakteristischen Objekt 2 zurückgeworfen wird und von einer Tiefenkamera 10 detektiert wird. Aus der Laufzeit der Emission 9 und der Reflexion 11 bestimmt eine mit dem bildgebenden Sensor 5 verbundene Auswerteeinheit 12 den Abstand des bildgebenden Sensors 5 von dem charakteristischen Objekt 2. Hierbei zeichnet die Tiefenkamera 10 ein vollständiges, flächiges Tiefenbild auf, bei dem jedem Bildpunkt ein Tiefenwert zugeordnet wird und als Tiefenbild abgelegt wird. Die Intensität der jeweils auf jeden Bildpunkt zurückgeworfenen Reflexion wird dem Bildpunkt ebenfalls zugeordnet, wodurch das korrespondierende, deckungsgleiche Grauwertbild entsteht, welches zur späteren Verarbeitung ebenfalls abgespeichert wird. Wird für die Darstellung der Szene ein radiometrisches Bild mit anderen spektralen Eigenschaften, wie etwa ein Farbbild, benötigt, so muss eine weitere Kamera 3 mit ebendiesen Eigenschaften hinzugefügt werden. Deckungsgleiche Tiefenbilder und radiometrische Bilder entstehen auch, wenn Zwei- oder Mehr-Ansicht-Stereokameras verwendet werden, als deren Kamera-Koordinatensystem eines der Koordinatensysteme der Teil-Kameras gewählt wird. Dann ist das radiometrische Bild dieser ausgewählten Referenz-Kamera deckungsgleich mit dem Tiefenbild der Zwei- oder Mehr-Ansicht-Stereokamera. Bei Tiefenkameras basierend auf aktivem Stereo, welches eine Grauwertbild-Kamera und einen Musterprojektor anstatt einer zweiten Kamera verwendet, ist das entstehende Grauwertbild durch das projizierte Muster dominiert und kann daher nicht zur Erkennung von Objekten verwendet werden. Derartige Kameras verfügen daher meist über eine zusätzliche Grauwert- oder Farbkamera, um ein radiometrisches Bild zusätzlich zum Tiefenbild der Szene zu liefern. Gleichzeitig nimmt dann ebenfalls eine radiometrische Kamera 6 aufgrund eines Lichteinfalls 7 ein radiometrisches Bild auf, welches ebenfalls aus Bildpunkten besteht, die aber jeder einen Grau- oder Farbwert aufweisen. Aufgrund der Ablage ist dieses radiometrische Bild jedoch nicht deckungsgleich zum Tiefenbild. Falls das radiometrische Bild und das Tiefenbild nicht bereits aufgrund des Sensorprinzips deckungsgleich sind, werden sie durch eine Transformation mittels aus der Literatur bekannter Referenzierungsverfahren auf Grundlage homologer Punkte in beiden Bildern pixelweise geometrisch ineinander überführt und sind danach näherungsweise deckungsgleich..

In einem weiteren Schritt erkennt nun die Auswerteeinheit 12, etwa mittels durch Deep Learning antrainierter Detektoren, in dem radiometrischen Bild charakteristische Objekte 2 und ermittelt deren Pixel-Koordinaten im radiometrischen Bild. Ihnen wird durch den Detektor eine Bedeutung als Label zugewiesen, welches die Klasse kennzeichnet, zu welcher der erkannte, charakteristische Punkt gehört, wie etwa bei einem Personenkörper das Label "rechtes Kniegelenk". Den charakteristischen Objektpunkten werden ferner die Tiefenwerte mit den gleichen Pixelkoordinaten aus dem radiometrischen Bild zugewiesen. Es wird daraufhin die räumliche Lage der einzelnen charakteristischen Objekte 2 in Bezug auf das Kamerakoordinatensystem der Kamera bestimmt, indem entlang der Geraden des entsprechend zu den Pixelkoordinaten gehörigen Sehstrahls die zugeordnete Tiefe abgetragen wird und somit die 3D-Koordinaten erhalten werden. Falls noch ein äußeres Koordinatensystem definiert ist, in welchem die Lage und Orientierung des Kamera-Koordinatensystem bekannt ist, können die im Kamera-Koordinatensystem angegebenen Koordinaten der charakteristischen Punkte des charakteristischen Objekts 2 durch die entsprechende Starrkörper-Transformation in die Koordinaten des äußeren Koordinatensystems umgerechnet werden. Danach können die charakteristischen Objekte 2 in räumlichen Bezug zueinander gesetzt werden.

Von einer Datenbank 13 importiert die Auswerteeinheit 12 nun ein Modell für die betrachtete Klasse von Körpern, also ein Körpermodell. Das Körpermodell beschreibt den räumlichen Zusammenhang der gelabelten charakteristischen Objekte 2 von Körpern der betrachteten Objektklasse und damit deren mögliche innere Freiheitsgrade. Das Körpermodell gibt somit Art und Anzahl der charakteristischen Objektpunkte 2 an und beschreibt ferner ihre gegenseitige Lage, Abstand, sowie die Freiheitsgrade ihrer gegenseitigen Bewegungen. Auch enthält sie Informationen darüber, wie Verbindungen 3 zwischen den charakteristischen Objekten 2 verlaufen. Ferner enthält das Körpermodell die Randbedingungen an die gegenseitigen Lagen, Abstände und Freiheitsgrade ihrer gegenseitigen Bewegungen in Form von Kostenfunktionen oder Regeln.

Wird das Körpermodell durch ein flexibles Objektmodell (Mesh, parametrisierte Oberflächenfunktionen oder Referenz-Modell und Deformationstransformation) beschrieben, ist der räumliche Zusammenhang bereits implizit durch die Angabe des Meshes bzw. der Oberflächenfunktionen oder des Referenzmodells gegeben und das Körpermodell enthält zusätzlich noch die Randbedingungen an die Parameterwerte in Form von Kostenfunktionen oder Regeln.

Im nächsten Schritt werden die charakteristischen Punkte einer variablen Anzahl von Körpermodellen zugeordnet und bilden danach die charakteristische Konstellation des Körpers. Im Falle von Meshes als Körpermodelle werden die Knoten des Meshes so bewegt, dass die Summe der lotrechten Abstände der charakteristischen Punkte von den Faces minimal wird. Im Falle von Oberflächenfunktionen als Körpermodelle werden die Parameterwerte der Oberflächenfunktionen solange verändert, bis die Summe der lotrechten Abstände der charakteristischen Punkte zur Oberflächenfunktion minimal wird. Im Falle von Referenzmodellen mit Deformationstransformation als Körpermodelle werden die Parameterwerte der Deformationstransformation solange verändert, bis die Summe der lotrechten Abstände der charakteristischen Punkte zur Oberfläche des deformierten Referenzmodells minimal wird.

Die Zuordnung der Punkte zu den Körpermodellen geschieht derart, dass die Summe der Kostenfunktionen für alle verwendeten Körpermodelle minimal ist oder der Erfüllungsgrad der Regeln aller verwendeten Körpermodelle maximal ist sowie dass möglichst wenige wesentlichen charakteristischen Objekte 2 fehlen oder übrig bleiben.

Sind die passenden Körpermodelle für alle abgebildeten Körper 1 gefunden, so werden die äußeren Freiheitsgrade entweder als Schwerpunkt und Hauptachsen der charakteristischen Konstellation oder der resultierenden Ausprägung des Meshes oder der Oberflächenfunktion oder des deformierten Referenzmodells berechnet. Mittels dieser äußeren Freiheitsgrade verifiziert die Auswerteeinheit 12, dass der Körper sich nicht in einer unerlaubten Lage im Raum befindet.

Die Auswerteeinheit wird bei jedem erstellten Bildpaar aus radiometrischem Bild und Tiefenbild eine solche Bestimmung anstellen und außerdem anhand der Ausprägungen der inneren und äußeren Freiheitsgrade prüfen, ob der zu beobachtende Körper 1 in eine unerlaubte Haltung gerät oder die mögliche Haltung des Körpers 1 mit einer kritischen Situation übereinstimmt. Dann wird die Auswerteeinheit 12 eine Alarmsignalisierung beginnen und so dafür sorgen, dass gegebenenfalls Abhilfe geschaffen wird.

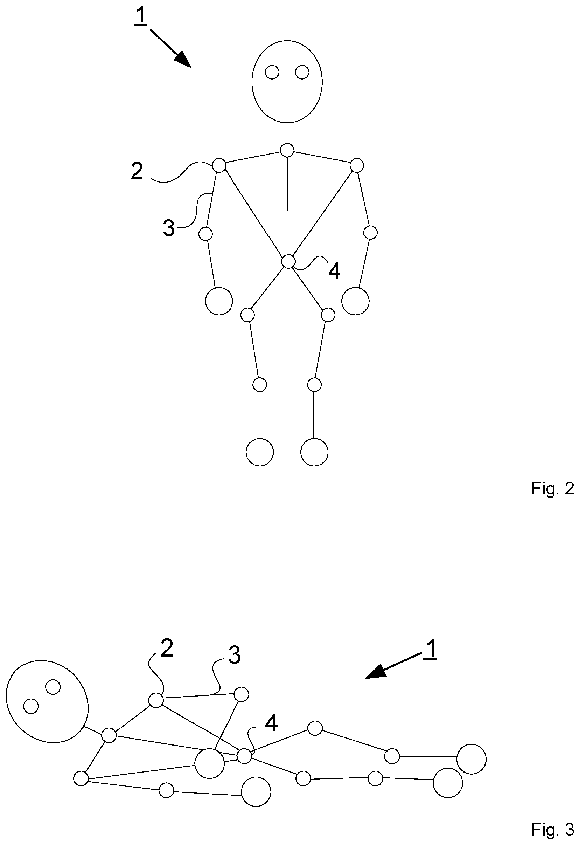

Figur 2 zeigt ein praktisches Anwendungsbeispiel für die Erfindung. Schematisch ist hier eine Person dargestellt, die aus der Sicht des vorliegenden Verfahrens einen Körper 1 darstellt. Von diesem Körper 1 wird ein radiometrisches Bild und ein Tiefenbild erstellt. Derartige charakteristische Objektpunkte können unterschiedliche Körperstellen beschreiben, so etwa ein Gelenk, die Hände, Füße oder auch die Augen. Der Schwerpunkt des Körpers 1 wird als Ursprungspunkt 4 definiert und bildet den Ursprung eines Objektkoordinatensystems, bezüglich dessen die inneren Freiheitsgrade der charakteristischen Punkte 2 bestimmt werden. Verbindungen 3 befinden sich zwischen den Gelenken und definieren für sich gesehen abgeleitete innere Freiheitsgrade. Die Auswerteeinheit 12 wird die Raumkoordinaten der charakteristischen Objekte 2 bestimmen und hierbei mit Vorgaben des Körpermodells, welches sie aus der Datenbank 13 ausliest, abgleichen.

Nach der Anpassung des Körpers 1 an ein Körpermodell wird die Auswerteeinheit 12 in einem nächsten Schritt nun die Situation prüfen, in welcher sich der Körper 1 derzeit befindet. Die Auswerteeinheit legt dabei den Ursprungspunkt 4 des Objektkoordinatensystems dieses Körpers 1 in den Bauchbereich, wo sich der Körperschwerpunkt befindet. Die Richtungsvektoren des Objektkoordinatensystems verlaufen entlang der Hauptachsen, also im Bild der Figur 2 genau senkrecht, genau waagrecht und genau in die Zeichenebene hinein. Dann vergleicht die Auswerteeinheit die Lage der Objektpunkte, insbesondere aber die Richtungsvektoren des Körperkoordinatensystems mit einem äußeren Koordinatensystem, das sich über die Lage der Kameras und deren Transformationsvorschriften ergibt. Aus diesem Vergleich ergibt sich im Fall der Figur 2, dass die Person aufrecht steht. Die Position der Augen deutet ebenfalls darauf hin, dass keine kritische Situation vorliegt, so dass die Auswerteeinheit 12 keine Alarmsignalisierung auslösen wird.

Figur 3 zeigt hingegen den Körper 1 aus Figur 2 in einer liegenden Position. Dies ergibt sich daraus, dass die Richtungsvektoren des Objektkoordinatensystems nun um 90° gedreht sind. Die Lage des Körpers 1 wird von der Auswerteeinheit aufgrund der Semantik als liegend eingeschätzt. An dieser Stelle können weitere Basisinformationen ins Spiel kommen. Erkennt die Auswerteeinheit etwa, dass der Körper 1 auf Bodenhöhe liegt und sich nicht bewegt, könnte dies zum Anlass genommen werden, einen Alarm auszulösen. Gleiches könnte gelten, wenn der Körper 1 an einem Ort liegt, an dem Liegen nicht vorgesehen ist, so etwa in einem Hausflur. Auch kann die Dauer und Häufigkeit des Liegens oder der Umstand, dass ein Aufstehen bei einer Bewegung nicht stattfindet, ein Alarmkriterium sein. Die Auswahl dieser Alarmkriterien liegt aber außerhalb der Erfindung und ist für diese auch nicht ausschlaggebend.

Vorstehend beschrieben ist somit ein Verfahren zur berührungslosen Ermittlung von Freiheitsgraden eines Körpers im dreidimensionalen Raum, welches ein vertieftes Wissen über die Lage und Orientierung und die innere Anordnung der Teile bzw. die Verformung eines Körpers im Raum vermittelt und es erlaubt, mithilfe einer Auswerteeinheit eine Situationsprüfung unter Berücksichtigung der Freiheitsgrade bereits aus einem einzelnen, unbewegten Bildpaar heraus vorzunehmen.

### BEZUGSZEICHENLISTE

- 1: Körper
- 2: charakteristisches Objekt
- 3: Verbindung
- 4: Ursprungspunkt
- 5: bildgebender Sensor
- 6: Radiometrische Kamera
- 7: Lichteinfall
- 8: Emitter
- 9: Emission
- 10: Tiefenkamera
- 11: Reflexion
- 12: Auswerteeinheit
- 13: Datenbank

## Patentansprüche

1. Verfahren zur berührungslosen Ermittlung von inneren Freiheitsgraden eines Körpers (1), welche Lagen und Orientierungen seiner beweglichen Teile, beziehungsweise dessen Deformation in Bezug auf ein Referenzmodell in einem Körperkoordinatensystem darstellen, im dreidimensionalen Raum, bei dem ein bildgebender Sensor (5) den Körper (1) in einem rad-D-Bild erfasst,
**dadurch gekennzeichnet, dass** zusätzlich eine berührungslose Ermittlung von äußeren Freiheitsgraden des Körpers (1) erfolgt, welche dessen Lage und Orientierung als Ganzes im Raum beschreiben, und eine Auswerteeinheit das rad-D-Bild auswertet und auf diesem jeweils einen Körperteil repräsentierende oder diesem angehörende charakteristische Objektpunkte identifiziert, sowie für die identifizierten charakteristischen Objektpunkte eine Liste von Pixelkoordinaten und die Zugehörigkeit zu dem Körperteil oder die Repräsentation des Körperteils anzeigenden Klassenbezeichnern zurückliefert, wobei die Auswerteeinheit (12) die so ermittelten Pixelkoordinaten mit den korrespondierenden Abstandswerten verknüpft und unter Berücksichtigung innerer Freiheitsgrade der Tiefenkamera aus diesen die zugehörigen dreidimensionalen Koordinaten in einem Kamerakoordinatensystem bestimmt und die Körperteile als punktförmige Objekte, als räumliche Objekte oder als einheitlichen Körper interpretiert, woraufhin die Auswerteeinheit (12) ein Körperkoordinatensystem bezüglich eines Ursprungspunktes bestimmt und die inneren Freiheitsgrade des Körpers mit Lagedaten der charakteristischen Objektpunkte bezüglich dieses Koordinatensystems, sowie die äußeren Freiheitsgrade mit Lagedaten des Körperkoordinatensystems im Kamerakoordinatensystem gleichsetzt.

2. Verfahren gemäß Anspruch 1, **dadurch gekennzeichnet, dass** die Auswerteeinheit (12) als Lagedaten punktförmiger Objekte Koordinaten im Körperkoordinatensystem oder für räumliche Objekte jeweils ein eigenes Objektkoordinatensystem des jeweiligen Objekts bildet und dessen Lage und Orientierung in Bezug auf das Körperkoordinatensystem als dessen Lagedaten bestimmt.

3. Verfahren gemäß einem der Ansprüche 1 oder 2, **dadurch gekennzeichnet, dass** die Auswerteeinheit (12) das rad-D-Bild aus einem zweidimensionalen radiometrischen Bild, dessen mit Objektpunkten des Körpers (1) korrespondierenden Bildpunkten unterschiedliche Farb-oder Grauwerte in Abhängigkeit von spektralen und radiometrischen Eigenschaften von dem betreffenden Objektpunkt emittierter oder reflektierter Strahlung zugeordnet sind, sowie einem Tiefenbild, dessen ebenfalls mit Objektpunkten des Körpers (1) korrespondierenden Bildpunkten unterschiedliche Abstandswerte in Abhängigkeit von dem Abstand zwischen dem betreffenden Objektpunkt und dem bildgebenden Sensor (5) zugeordnet sind, zusammenfügt, wobei die Auswerteeinheit (12) jedem Bildpunkt des radiometrischen Bilds einen zum gleichen Objektpunkt des Körpers gehörenden Bildpunkt des Tiefenbilds eineindeutig zuordnet.

4. Verfahren gemäß Anspruch 3, **dadurch gekennzeichnet, dass** die Zuordnung eines Bildpunkts des radiometrischen Bildes zu einem virtuellen, insbesondere durch Interpolation ermittelten, Bildpunkt des Tiefenbildes erfolgt, oder dass die Zuordnung eines Bildpunkts des Tiefenbildes zu einem virtuellen, insbesondere durch Interpolation ermittelten, Bildpunkt des radiometrischen Bildes erfolgt.

5. Verfahren gemäß einem der vorhergehenden Ansprüche, **dadurch gekennzeichnet, dass** die Auswerteeinheit (12) aus Kalibrierungsdaten des bildgebenden Sensors (5) sowie den von dem bildgebenden Sensor (5) ermittelten Bilddaten dessen Lage in einem äußeren Koordinatensystem bestimmt.

6. Verfahren gemäß einem der vorhergehenden Ansprüche, **dadurch gekennzeichnet, dass** der bildgebende Sensor (5) eine ein radiometrisches Bild erzeugende radiometrische Kamera (6), vorzugsweise eine CCD- oder CMOS-Kamera, und eine ein Tiefenbild erzeugende Tiefenkamera (10), vorzugsweise eine TOF-Kamera, oder eine Kombination hieraus, etwa eine RGB-D-Kamera, aufweist.

7. Verfahren gemäß einem der vorhergehenden Ansprüche, **dadurch gekennzeichnet, dass** die Auswerteeinheit (12) charakteristische Objektpunkte klassifiziert und aufgrund dieser Klassifikation zu einem charakteristischen Objekt (2) zuordnet.

8. Verfahren gemäß Anspruch 7, **dadurch gekennzeichnet, dass** die Auswerteeinheit (12) eine Wahrscheinlichkeitskarte erstellt, gemäß der jedem charakteristischen Objektpunkt ein Wert für die Wahrscheinlichkeit zugeordnet wird, mit der er einem charakteristischen Objekt (2) zugehörig ist und/oder gemäß der jedes charakteristische Objekt (2) an einer bestimmten Position angeordnet ist.

9. Verfahren gemäß einem der vorhergehenden Ansprüche, **dadurch gekennzeichnet, dass** jedem charakteristischen Objekt (2) ein Abstandswert zur Bemessung des Abstands des charakteristischen Objekts (2) zu dem bildgebenden Sensor (5) zugewiesen wird.

10. Verfahren gemäß einem der vorhergehenden Ansprüche, **dadurch gekennzeichnet, dass** als Ursprungspunkt (4) des Objektkoordinatensystems der Schwerpunkt des Körpers (1) definiert wird.

11. Verfahren gemäß einem der vorhergehenden Ansprüche, **dadurch gekennzeichnet, dass** als Koordinatenachsen des Objektkoordinatensystems die Hauptachsen des Körpers (1) definiert werden.

12. Verfahren gemäß einem der vorhergehenden Ansprüche, **dadurch gekennzeichnet, dass** der Auswerteeinheit (5) eine Datenbank (13) zugeordnet ist, aus welcher die Auswerteeinheit (5) anhand der Gesamtheit der charakteristischen Objektpunkte (2) ein Körpermodell auswählt und aufruft, welche zu der Gesamtheit charakteristischer Objektpunkte (2) zugehörige Freiheitsgrade des Körpers (1) definiert und die Ausprägungswerte der Freiheitsgrade des Körpers bestimmt.

13. Verfahren gemäß Anspruch 12, **dadurch gekennzeichnet, dass** jedes in der Datenbank (13) hinterlegte Körpermodell einen Körper (1) betrifft und eine Mehrzahl diesem zugeordneter charakteristischer Objektpunkte (2) nach Art und Anzahl zusammenfasst, sowie deren Verbindungen und die Freiheitsgrade der gegenseitigen Bewegung der enthaltenen charakteristischen Objekte (2) umfasst.

14. Verfahren gemäß einem der vorhergehenden Ansprüche, **dadurch gekennzeichnet, dass** die Auswerteeinheit (12) im Zuge einer Plausibilisierung die gegenseitige Lage der charakteristischen Objekte (2) und ihre gegenseitige Winkelstellung ermittelt und mit den Vorgaben des Körpermodells abgleicht.

15. Verfahren gemäß Anspruch 14, **dadurch gekennzeichnet, dass** die Auswerteeinheit (12) im Fall einer starken Abweichung von den Vorgaben des Körpermodells ein anderes Körpermodell auswählt und/oder die charakteristischen Objekte (2) neu ordnet.

16. Verfahren gemäß einem der vorhergehenden Ansprüche, **dadurch gekennzeichnet, dass** auf dem rad-D-Bild verdeckte oder fehlende charakteristische Objekte (2) von der Auswerteeinheit (12) unberücksichtigt bleiben.

17. Verfahren gemäß einem der vorhergehenden Ansprüche, **dadurch gekennzeichnet, dass** die Auswerteeinheit (12) verschiedene charakteristische Objekte (2) bedarfsweise zu unterschiedlichen Körpern (1) auf demselben rad-D-Bild zuordnet.

18. Verfahren gemäß einem der vorhergehenden Ansprüche, **dadurch gekennzeichnet, dass** die Auswerteeinheit (12) die in den Bildern des bildgebenden Sensors (5) erfasste Lage des Körpers (1) mit in der Datenbank (13), vorzugsweise in dem in der Datenbank (13) gespeicherten Körpermodell, hinterlegten Standardsituationen vergleicht und im Fall der Übereinstimmung dem Körper (1) eine Situationsbeschreibung zuordnet.

19. Verfahren gemäß Anspruch 18, **dadurch gekennzeichnet, dass** die Auswerteeinheit (12) im Fall einer Übereinstimmung der Lage des Körpers (1) mit einer hinterlegten kritischen Situation eine Alarmsignalisierung auslöst.

## Claims

1. Method for contactlessly determining internal degrees of freedom of a body (1), which represent positions and orientations of moving parts of the body or its deformation in relation to a reference model in a body coordinate system, in three-dimensional space, in which method an imaging sensor (5) captures the body (1) in a rad-D image, **characterized in that** external degrees of freedom of the body (1), which describe the position and orientation as a whole in space, are also determined contactlessly, and an evaluation unit evaluates the rad-D image and identifies characteristic object points thereon which in each case represent a body part or are associated therewith, and returns a list of pixel coordinates and class identifiers which indicate the association with the body part or the representation of the body part for the identified characteristic object points, the evaluation unit (12) linking the pixel coordinates determined in this way with the corresponding distance values and, taking into account internal degrees of freedom of the depth camera, determining therefrom the associated three-dimensional coordinates in a camera coordinate system and interpreting the body parts as punctiform objects, as spatial objects or as uniform bodies, whereupon the evaluation unit (12) determines a body coordinate system with respect to an origin point and equates the internal degrees of freedom of the body with position data of the characteristic object points with respect to this coordinate system and equates the external degrees of freedom with position data of the body coordinate system in the camera coordinate system.

2. Method according to claim 1, **characterized in that** the evaluation unit (12) forms coordinates in the body coordinate system as position data for punctiform objects or, for spatial objects, in each case forms a specific object coordinate system of the relevant object and determines the position and orientation of the object in relation to the body coordinate system as the position data of said object.

3. Method according to either claim 1 or claim 2, **characterized in that** the evaluation unit (12) assembles the rad-D image from a two-dimensional radiometric image, of which the pixels which correspond to object points of the body (1) are assigned different color values or gray values depending on spectral and radiometric properties of radiation emitted or reflected by the relevant object point, and a depth image, of which the pixels which also correspond to object points of the body (1) are assigned different distance values depending on the distance between the relevant object point and the imaging sensor (5), the evaluation unit (12) uniquely assigning a pixel of the depth image that is associated with the same object point of the body to each pixel of the radiometric image.

4. Method according to claim 3, **characterized in that** a pixel of the radiometric image is assigned to a virtual pixel of the depth image, which is in particular determined by interpolation, or **in that** a pixel of the depth image is assigned to a virtual pixel of the radiometric image, which is in particular determined by interpolation.

5. Method according to any of the preceding claims, **characterized in that** the evaluation unit (12) determines, from calibration data of the imaging sensor (5) and the image data determined by the imaging sensor (5), the position of the imaging sensor in an external coordinate system.

6. Method according to any of the preceding claims, **characterized in that** the imaging sensor (5) comprises a radiometric camera (6), preferably a CCD or CMOS camera, which generates a radiometric image and a depth camera (10), preferably a TOF camera, which generates a depth image or a combination thereof, such as an RGB-D camera.

7. Method according to any of the preceding claims, **characterized in that** the evaluation unit (12) classifies characteristic object points and assigns them to a characteristic object (2) on the basis of this classification.

8. Method according to claim 7, **characterized in that** the evaluation unit (12) creates a probability map, according to which each characteristic object point is assigned a value for the probability with which it is associated with a characteristic object (2), and/or according to which each characteristic object (2) is arranged in a specific position.

9. Method according to any of the preceding claims, **characterized in that** each characteristic object (2) is assigned a distance value for measuring the distance of the characteristic object (2) from the imaging sensor (5).

10. Method according to any of the preceding claims, **characterized in that** the center of gravity of the body (1) is defined as the origin point (4) of the object coordinate system.

11. Method according to any of the preceding claims, **characterized in that** the main axes of the body (1) are defined as the coordinate axes of the object coordinate system.

12. Method according to any of the preceding claims, **characterized in that** the evaluation unit (5) is associated with a database (13), from which the evaluation unit (5) selects and retrieves a body model based on the entirety of the characteristic object points (2), which body model defines degrees of freedom of the body (1) that are associated with the entirety of the characteristic object points (2) and determines the characteristic values of the degrees of freedom of the body.

13. Method according to claim 12, **characterized in that** each body model stored in the database (13) relates to a body (1) and combines a plurality of characteristic object points (2) assigned thereto according to type and number and comprises the connections of said object points and the degrees of freedom of the mutual movement of the included characteristic objects (2).

14. Method according to any of the preceding claims, **characterized in that** the evaluation unit (12) determines the mutual position of the characteristic objects (2) and their mutual angular position in the course of a plausibility check and compares these positions with the specifications of the body model.

15. Method according to claim 14, **characterized in that** the evaluation unit (12) selects a different body model and/or rearranges the characteristic objects (2) in the event of a significant deviation from the specifications of the body model.

16. Method according to any of the preceding claims, **characterized in that** characteristic objects (2) which are covered or missing on the rad-D image are not taken into account by the evaluation unit (12).

17. Method according to any of the preceding claims, **characterized in that** the evaluation unit (12) assigns different characteristic objects (2) to different bodies (1) on the same rad-D image as required.

18. Method according to any of the preceding claims, **characterized in that** the evaluation unit (12) also stores the position of the body (1) that is detected in the images of the imaging sensor (5) in the database (13), preferably in the body model stored in the database (13), compares stored standard situations, and, in the event of a match, assigns a situation description to the body (1).

19. Method according to claim 18, **characterized in that** the evaluation unit (12) triggers an alarm signal if the position of the body (1) matches a stored critical situation.

## Revendications

1. Procédé de détermination sans contact de degrés de liberté internes d'un corps (1) qui représentent des positions et orientations de ses parties mobiles, ou sa déformation par rapport à un modèle de référence dans un système de coordonnées de corps, dans un espace tridimensionnel, dans lequel un capteur d'imagerie (5) détecte le corps (1) dans une image rad-D,
**caractérisé en ce que** des degrés de liberté externes du corps (1) sont en outre déterminés sans contact, lesquels décrivent sa position et son orientation dans son ensemble dans l'espace, et une unité d'évaluation évalue l'image rad-D et identifie sur celle-ci des points d'objet représentant respectivement une partie de corps ou étant caractéristiques à celle-ci, et renvoie, pour les points d'objet caractéristiques identifiés, une liste de coordonnées de pixels et d'identificateurs de classes indiquant l'association à la partie de corps ou la représentation de la partie de corps, l'unité d'évaluation (12) reliant les coordonnées de pixels ainsi déterminées aux valeurs de distance correspondantes et déterminant à partir de celles-ci les coordonnées tridimensionnelles associées dans un système de coordonnées de caméra, en tenant compte de degrés de liberté internes de la caméra de profondeur, et interprétant les parties de corps comme objets ponctuels, comme objets spatiaux ou comme corps unique, après quoi l'unité d'évaluation (12) détermine un système de coordonnées de corps par rapport à un point d'origine et assimile les degrés de liberté internes du corps à des données de position des points d'objet caractéristiques par rapport audit système de coordonnées, et assimile les degrés de liberté externes à des données de position du système de coordonnées de corps dans le système de coordonnées de caméra.

2. Procédé selon la revendication 1, **caractérisé en ce que** l'unité d'évaluation (12) forme des coordonnées dans le système de coordonnées de corps en tant que données de position d'objets ponctuels ou, pour des objets spatiaux, forme respectivement un propre système de coordonnées d'objet de l'objet respectif et détermine sa position et son orientation par rapport au système de coordonnées de corps en tant que ses données de position.

3. Procédé selon l'une des revendications 1 ou 2, **caractérisé en ce que** l'unité d'évaluation (12) regroupe l'image rad-D à partir d'une image radiométrique bidimensionnelle dont les points d'image correspondant à des points d'objet du corps (1) sont attribués à des valeurs de couleur ou de gris différentes en fonction de propriétés spectrales et radiométriques du rayonnement émis ou réfléchi par le point d'objet concerné, et d'une image de profondeur dont les points d'image correspondant également à des points d'objet du corps (1) sont attribués à des valeurs de distance différentes en fonction de la distance entre le point d'objet concerné et le capteur d'imagerie (5), l'unité d'évaluation (12) attribuant de manière univoque un pixel d'image de l'image de profondeur appartenant au même point d'objet du corps à chaque pixel d'image de l'image radiométrique.

4. Procédé selon la revendication 3, **caractérisé en ce qu'**un pixel d'image de l'image radiométrique est attribué à un pixel d'image virtuel de l'image de profondeur déterminé en particulier par interpolation, ou **en ce qu'**un pixel d'image de l'image de profondeur est attribué à un pixel d'image virtuel de l'image radiométrique déterminé en particulier par interpolation.

5. Procédé selon l'une des revendications précédentes, **caractérisé en ce que** l'unité d'évaluation (12) détermine sa position dans un système de coordonnées externe à partir de données d'étalonnage du capteur d'imagerie (5) et des données d'image déterminées par le capteur d'imagerie (5).

6. Procédé selon l'une des revendications précédentes, **caractérisé en ce que** le capteur d'imagerie (5) est une caméra radiométrique (6) génératrice d'image radiométrique, de préférence une caméra CCD ou CMOS, et une caméra de profondeur (10) génératrice d'image de profondeur, de préférence une caméra TOF, ou une combinaison de celles-ci, par exemple une caméra RGB-D.

7. Procédé selon l'une des revendications précédentes, **caractérisé en ce que** l'unité d'évaluation (12) classifie des points d'objet caractéristiques et les attribue à un objet caractéristique (2) sur la base de ladite classification.

8. Procédé selon la revendication 7, **caractérisé en ce que** l'unité d'évaluation (12) crée une carte de probabilités selon laquelle chaque point d'objet caractéristique se voit attribuer une valeur pour la probabilité avec laquelle il est associé à un objet caractéristique (2) et/ou selon laquelle chaque objet caractéristique (2) est disposé à une position déterminée.

9. Procédé selon l'une des revendications précédentes, **caractérisé en ce qu'**une valeur de distance est affectée à chaque objet caractéristique (2) pour la mesure de la distance de l'objet caractéristique (2) par rapport au capteur d'imagerie (5).

10. Procédé selon l'une des revendications précédentes, **caractérisé en ce que** le centre de gravité du corps (1) est défini comme point d'origine (4) du système de coordonnées d'objet.

11. Procédé selon l'une des revendications précédentes, **caractérisé en ce que** les axes principaux du corps (1) sont définis comme axes de coordonnées du système de coordonnées d'objet.

12. Procédé selon l'une des revendications précédentes, **caractérisé en ce que** l'unité d'évaluation (5) est associée à une base de données (13) à partir de laquelle l'unité d'évaluation (5), sur la base de l'ensemble des points d'objet caractéristiques (2), sélectionne et fait appel à un modèle de corps qui définit des degrés de liberté du corps (1) associés à l'ensemble de points d'objet caractéristiques (2) et détermine les valeurs d'expression des degrés de liberté du corps.

13. Procédé selon la revendication 12, **caractérisé en ce que** chaque modèle de corps stocké dans la base de données (13) se rapporte à un corps (1) et regroupe une pluralité de points d'objet caractéristiques (2) affectés à celui-ci selon leur type et leur nombre, ainsi que leurs liaisons et les degrés de liberté du mouvement mutuel des objets caractéristiques (2) contenus.

14. Procédé selon l'une des revendications précédentes, **caractérisé en ce que** l'unité d'évaluation (12) détermine la position mutuelle des objets caractéristiques (2) et leur position angulaire mutuelle au cours d'un contrôle de plausibilité et les compare avec les spécifications du modèle de corps.

15. Procédé selon la revendication 14, **caractérisé en ce que** l'unité d'évaluation (12) sélectionne un modèle de corps différent et/ou réorganise les objets caractéristiques (2) en cas d'écart important par rapport aux spécifications du modèle de corps.

16. Procédé selon l'une des revendications précédentes, **caractérisé en ce que** les objets caractéristiques (2) masqués ou manquants sur l'image rad-D ne sont pas pris en compte par l'unité d'évaluation (12).

17. Procédé selon l'une des revendications précédentes, **caractérisé en ce que** l'unité d'évaluation (12) attribue différents objets caractéristiques (2) à différents corps (1) sur la même image rad-D selon les besoins.

18. Procédé selon l'une des revendications précédentes, **caractérisé en ce que** l'unité d'évaluation (12) compare la position du corps (1) détectée dans les images du capteur d'imagerie (5) à des situations standard stockées dans la base de données (13), de préférence dans le modèle de corps stocké dans la base de données (13), et, en cas de correspondance, attribue une description de situation au corps (1).

19. Procédé selon la revendication 18, **caractérisé en ce que** l'unité d'évaluation (12) déclenche un signal d'alarme en cas de correspondance de la position du corps (1) à une situation critique stockée.
